# EUROPÄISCHE PATENTSCHRIFT

(11) **EP 3 296 820 B1**
(45) Veröffentlichungstag und Bekanntmachung des Hinweises auf die Patenterteilung: **19.06.2019**
(21) Anmeldenummer: 16189313.6
(22) Anmeldetag: 16.09.2016
(51) Int. Cl.: G05B 5/01

(54) **REGELEINRICHTUNG UND VERFAHREN**
CONTROL DEVICE AND METHOD
DISPOSITIF ET PROCÉDÉ DE RÉGLAGE

(43) Veröffentlichungstag der Anmeldung: 21.03.2018
(73) Patentinhaber: Siemens Aktiengesellschaft, 80333 München (DE)
(72) Erfinder: Pfeiffer, Bernd-Markus, 76744 Wörth (DE)

(56) Entgegenhaltungen:
- EP-B1- 2 579 112

## Beschreibung

Die Erfindung betrifft eine Regeleinrichtung und ein Regelungsverfahren, wobei ein Totzonenglied einem Regler vorgeschaltet ist, gemäß dem Oberbegriff des Anspruchs 1 bzw. dem Oberbegriff des Anspruchs 6.

In verfahrens- oder prozesstechnischen Anlagen werden häufig Behälter, zum Beispiel Tanks oder Reaktoren, verwendet, deren Zulauf mit einem schwankenden Volumenstrom behaftet ist und an welchen zur Füllstandsregelung für Stelleingriffe ein Stetigventil im Ablauf verwendet wird. Es handelt sich dabei um Regelstrecken ohne Ausgleich, das heißt sie sind ohne Regler nicht asymptotisch stabil oder anders ausgedrückt, es findet bei einem Stellgrößensprung keine asymptotische Annäherung an eine neue Endlage innerhalb des Regelbereichs statt. Bei Handbetrieb des Reglers erfordern derartige Regelstrecken daher ständige Aufmerksamkeit des Anlagenfahrers.

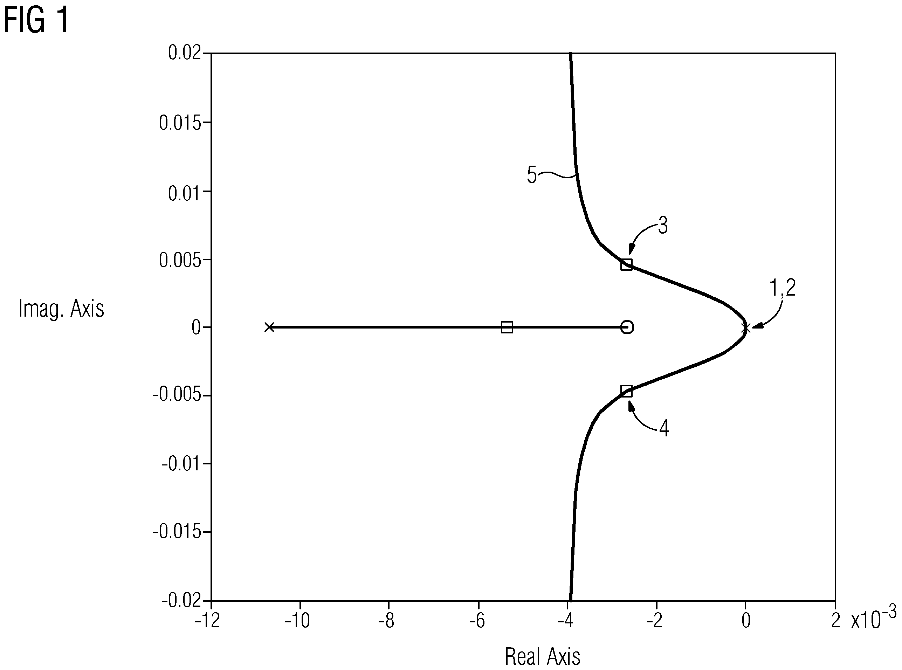

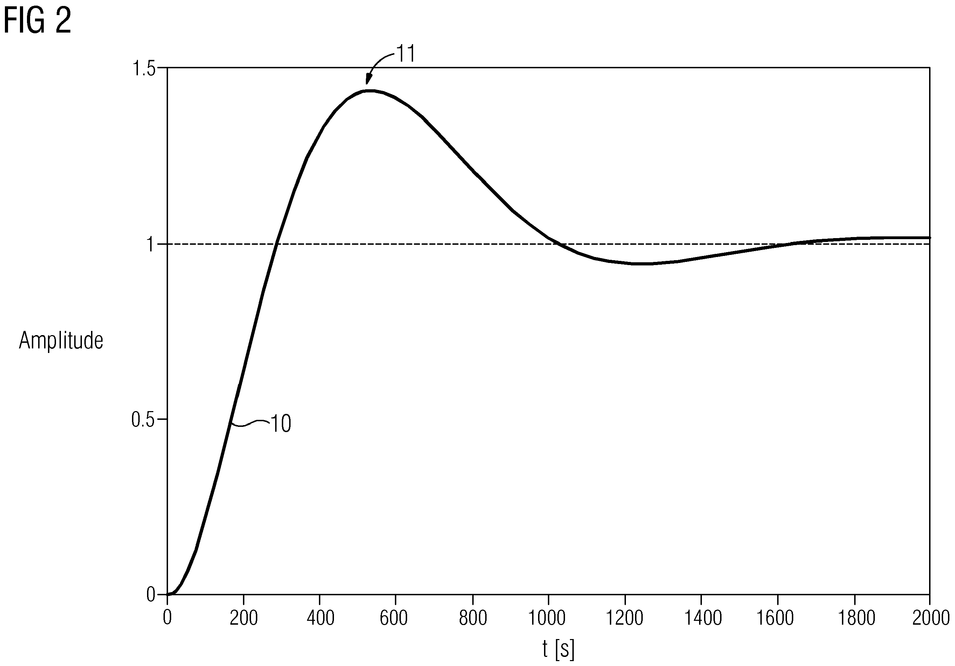

In verfahrenstechnischen Anlagen werden Behälter häufig als Pufferbehälter eingesetzt, um eine möglichst gleichmäßige Ablaufmenge zu realisieren. Durch eine Regelung soll in diesem Fall nicht ein fester Füllstandswert, einem Sollwert entsprechend, gehalten werden, sondern der Füllstand muss sich lediglich innerhalb definierter Grenzen befinden, um ein Überlaufen oder Leerlaufen des Behälters zu vermeiden. Diese Aufgabenstellung kann als "Pufferstandsregelung" bezeichnet werden. Diese Zielsetzung ist atypisch für Regelkreise, so dass die gängigen Entwurfsverfahren nicht zu sinnvollen Ergebnissen führen. Bisher werden die Parameter linearer PI- oder P-Regler daher überwiegend durch Experimente eingestellt. Die Problematik des Reglerentwurfs soll im Folgenden anhand der in den Zeichnungen dargestellten Figuren 1 und 2 näher erläutert werden.

Aus Sicht der Systemdynamik ist ein I-Anteil im Regler in Kombination mit einer integrierenden oder quasi integrierenden Füllstandregelstrecke unvorteilhaft. Dies wird anhand der Figuren 1 und 2 verdeutlicht.

Durch Abszisse und Ordinate wird in Figur 1 eine komplexe s-Ebene aufgespannt, wobei an der mit "Real Axis" beschrifteten Abszisse die Realteile und an der mit "Imag Axis" beschrifteten Ordinate die Imaginärteile aufgetragen sind. Dargestellt ist die Wurzelortskurve 5 eines PI-Reglers an einer IT1-Strecke mit den Paramatern Ki = -0,03 und T1 = 93,3, wobei der Regler nach dem Betragsoptimum entworfen ist, also die Parameter
Gain = -0,18 und Ti = 373 besitzt. Sowohl die Strecke als auch der Regler bringen dann einen Pol 1,2 im Ursprung der s-Ebene, das heißt an der Stabilitätsgrenze, mit. Durch Schließen des Regelkreises entsteht ein komplexes Polpaar, das sich durch Einstellung des Reglers nur begrenzt nach links verschieben lässt, bevor es nach außen abdriftet, so dass typischerweise schwach gedämpfte Schwingungen mit einer eher langsamen Frequenz übrig bleiben. Die Pole 3, 4 des geschlossenen Regelkreises sind durch Quadrate markiert. Mit zunehmender Reglerverstärkung bewegen sie sich entlang der Wurzelortskurve 5 von den Polen 1, 2 des offenen Regelkreises weg. Das bedeutet, es können unerwünschte Dauerschwingungen entstehen. Wenn man die Verstärkung ausgehend vom hier dargestellten Betragsoptimum noch weiter erhöhen würde, wandert das komplexe Polpaar 3, 4 nur noch wenig nach links, das heißt der Regelkreis wird nur noch wenig schneller, entfernt sich aber deutlich von der reellen Achse nach oben bzw. unten, das heißt die Dämpfung wird schlechter. In der Praxis wird der I-Anteil im Regler dennoch häufig verwendet, weil die bleibenden Regelabweichungen eines reinen P-Reglers bei typischen Anlagenauslegungen so groß wären, dass sie nicht toleriert werden könnten.

Ergänzend zeigt zur Verdeutlichung der beschriebenen Entwurfsproblematik Figur 2 die Sprungantwort des geschlossenen Regelkreises mit der in Figur 1 dargestellten Wurzelortskurve 5. Auf der Abszisse, beschriftet mit "Time (seconds)" ist die Zeit in Sekunden, auf der Ordinate, beschriftet mit "Amplitude", die normierte Amplitude der Regelgröße aufgetragen. Bereits mit dem zuvor beschriebenen, nach dem Betragsoptimum entworfenen Regler zeigt der geschlossene Regelkreis in einem Verlauf 10 der Regelgröße einen Überschwinger 11 von mehr als 40%. Daher fallen Füllstandregelstrecken bei der Analyse der Regelgüte verfahrenstechnischer Anlagen besonders häufig durch schlechte Kennzahlen auf. Ein Tiefpassfilter für den verrauschten Füllstandsmesswert wäre im Hinblick auf die Beruhigung der Ventilbewegungen zwar wünschenswert, würde aber eine weitere Verzögerung mit destabilisierender Wirkung darstellen. Die Verwendung einer herkömmlichen Totzone bei Regelstrecken ohne Ausgleich würde typischerweise zu einer Arbeitsbewegung des Reglers am oberen oder unteren Rand der Totzone führen, was der Zielsetzung einer Pufferstandsregelung jedoch völlig zuwider laufen würde.

Zur Anwendung in Regelkreisen, in welchen beispielsweise ein Ventil als mechanisches Stellglied verwendet wird, ist aus der EP 2 579 112 B1 bekannt, einem linearen Regler ein Totzonenglied vorzuschalten, um eine Reduktion der Häufigkeit von Stelleingriffen im eingeschwungenen Zustand der Regelung zu erreichen. Dies führt zu einer Senkung von Energieverbrauch und Verschleiß an dem verwendeten Regelventil. Bei Ventilen ist der Energieverbrauch nämlich direkt abhängig von den zurückgelegten Verfahrwegen, das heißt vom zeitlichen Integral des Stellweges. Speziell bei elektropneumatisch betriebenen Stellventilen ist der Verbrauch an Druckluft proportional zu den gegen eine Federkraft zurückgelegten Verfahrwegen, wenn es sich um einen einfach wirkenden pneumatischen Antrieb handelt. Die Reduktion von Stelleingriffen wird durch folgende Eigenschaft des bekannten Totzonenglieds erreicht: Wenn eine Regelabweichung des Regelkreises einen ersten Schwellwert überschreitet, wird das Totzonenglied automatisch deaktiviert, wobei im deaktiven Zustand eine über das Totzonenglied geführte Regelabweichung von einer eingestellten Totzone unbeeinflusst ist. Wenn danach die Regelabweichung einen zweiten Schwellwert, der kleiner als der erste Schwellwert ist, unterschreitet, wird das Totzonenglied automatisch wieder aktiviert. Bezüglich weiterer Ausgestaltungen und Vorteile des bekannten Totzonenglieds wird auf die EP 2 579 112 B1 verwiesen. Die Verwendung des bekannten Totzonenglieds in einer Pufferstandsregelung würde jedoch ohne weitere Maßnahmen zwangsläufig zu einem Wegdriften des Füllstands führen, da der geschlossene Regelkreis bei Verwendung eines PI-Reglers, wie oben näher erläutert, bezüglich der Stabilität problematisch ist.

Der Erfindung liegt die Aufgabe zugrunde, eine Einrichtung und ein Verfahren zur Regelung des Füllstands in einem Behälter, der als Pufferspeicher dient, zu schaffen, mit welchen die Gleichmäßigkeit des Ablaufs aus dem Behälter verbessert werden kann.

Zur Lösung dieser Aufgabe weist die neue Regeleinrichtung der eingangs genannten Art die im kennzeichnenden Teil des Anspruchs 1 angegebenen Merkmale auf. In den abhängigen Ansprüchen sind vorteilhafte Weiterbildungen der Erfindung, in Anspruch 6 ein Regelungsverfahren, in den Ansprüchen 7 und 8 ein entsprechendes Computerprogramm bzw. ein Computerprogrammprodukt beschrieben.

In der Regeleinrichtung wird der Wert des Füllstands als Istwert der Regelgröße erfasst. Ein Zulaufwert, der dem Volumenstrom im Zulauf zum Behälter entspricht, wird ebenfalls bestimmt. Dabei kann es sich um eine Durchflussmessung irgendwo in der Rohrleitung des Zulaufs, um die Drehzahl einer Pumpe oder um die Stellung eines Ventils im Zulauf handeln. Der I-Anteil des bisher verwendeten PI-Reglers wird durch eine Korrektur der durch den Regler bestimmten Stellgröße, eine Art Störgrößenaufschaltung, die in Abhängigkeit des Zulaufwerts bemessen wird, ersetzt. Diese Maßnahme sorgt dafür, dass der korrigierte Stellwert des Reglers für jede realistische Zulaufmenge bereits ungefähr auf einem sinnvollen Wert liegt, und reduziert die bleibende Regelabweichung bei Verwendung eines reinen P-Reglers auf ein tolerierbares Maß. Dabei kann bereits eine statische Störgrößenaufschaltung genügen, die vorzugsweise über ein Kennlinienglied mit nicht linearer Kennlinie geführt ist.

Anstelle des P-Reglers ist für die Regeleinrichtung auch ein PI-Regler mit einem verhältnismäßig klein gewählten I-Anteil geeignet, d. h. einem I-Anteil, der vorzugsweise kleiner als die Hälfte des I-Anteils eines Reglers gewählt ist, der wie eingangs beschrieben, nach dem Betragsoptimum entworfen wurde.

Durch das Entfernen bzw. das Verringern des I-Anteils wird die Systemdynamik verbessert, die ansonsten - wie zuvor beschrieben - aufgrund der Kombination des I-Anteils des beispielsweise nach Betragsoptimum entworfenen Reglers mit einer integrierenden oder quasi integrierenden Füllstandregelstrecke problematisch sein könnte.

In einer weiteren vorteilhaften Ausgestaltung wird zur Bestimmung des Korrekturwerts, welcher vom jeweiligen Zulaufwert abhängig ist und beispielsweise als Störgröße auf eine Störgrößenaufschaltung des Reglers geführt ist, ein Kennlinienglied verwendet, dessen Kennlinie empirisch vorbestimmt ist. Zur empirischen Ermittlung der Stützpunkte für die Kennlinie als Polygonzug werden bei mittlerem Behälterfüllstand eine Vielzahl verschiedener Zulaufmengen eingestellt, die im praktischen Betrieb des Pufferbehälters möglicherweise vorkommen, und dazu die jeweiligen Stellungen des Ablaufventils ermittelt, die erforderlich sind, um den Füllstand bei den jeweils eingestellten Zulaufwerten zumindest einigermaßen konstant zu halten.

Im Regelkreis kann aufgrund der positiven Eigenschaften der Regeleinrichtung ein Regelventil mit pneumatischem Antrieb zur Einstellung des Volumenstroms im Ablauf eingesetzt werden. In verfahrenstechnischen Anlagen sind diese insbesondere aus Gründen des Explosionsschutzes vorteilhaft. Durch eine interne Totzone eines zur Einstellung des Ventils verwendeten elektropneumatischen Stellungsreglers und aufgrund eines beispielsweise durch Haftreibung an einer Stopfbuchse entstehenden Schleppfehlers besitzen diese eine für übliche Füllstandsregelungen problematische Dynamik. Auch Nichtlinearitäten der Ventilkennlinie konnten bisher eine Regelung bei Verwendung eines Regelventils mit pneumatischem Antrieb zusätzlich erschweren. In der neuen Regeleinrichtung sowie dem neuen Regelungsverfahren können Regelventile mit pneumatischem Antrieb jedoch mit Vorteil eingesetzt werden, ohne dass die beschriebenen Eigenschaften zu Problemen führen würden.

Im Hinblick auf weitere Einsparungen von Ventilbewegungen kann das Zulaufsignal, das heißt im Falle einer zeitdiskreten Regelung die Folge erfasster Zulaufwerte, über ein Tiefpassfilter geglättet und, falls gewünscht, auch stark verzögert werden.

Ein Verfahren zur Regelung des Füllstands in einem Pufferspeicher, welches mit der Regeleinrichtung durchgeführt werden kann, ist bevorzugt in Software oder einer Kombination von Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil eines Automatisierungsgeräts, durch welches die Regeleinrichtung realisiert ist, oder wird in einem Speicher des Automatisierungsgeräts vorgehalten oder ist in diesen Speicher ladbar, so dass beim Betrieb des Automatisierungsgeräts dieses das Verfahren zur Regelung des Füllstands in einem Pufferspeicher automatisch ausführt.

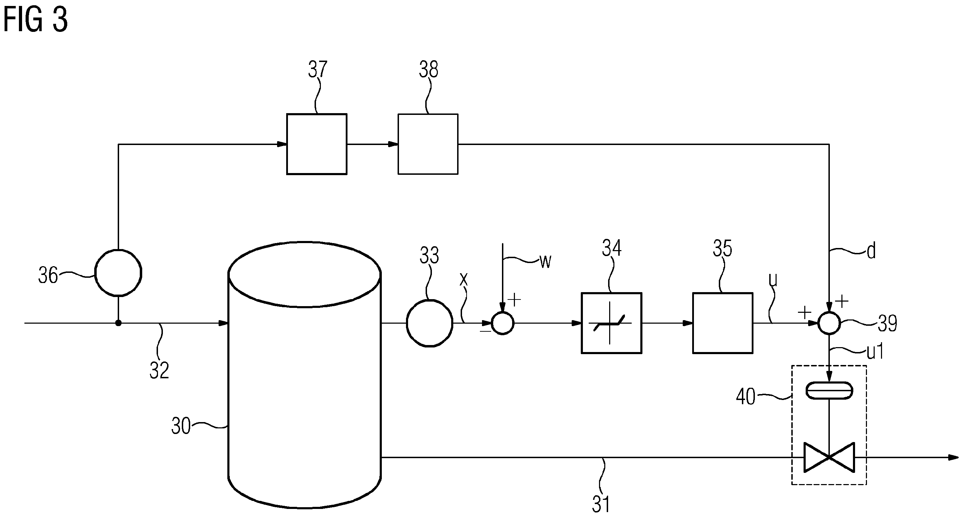

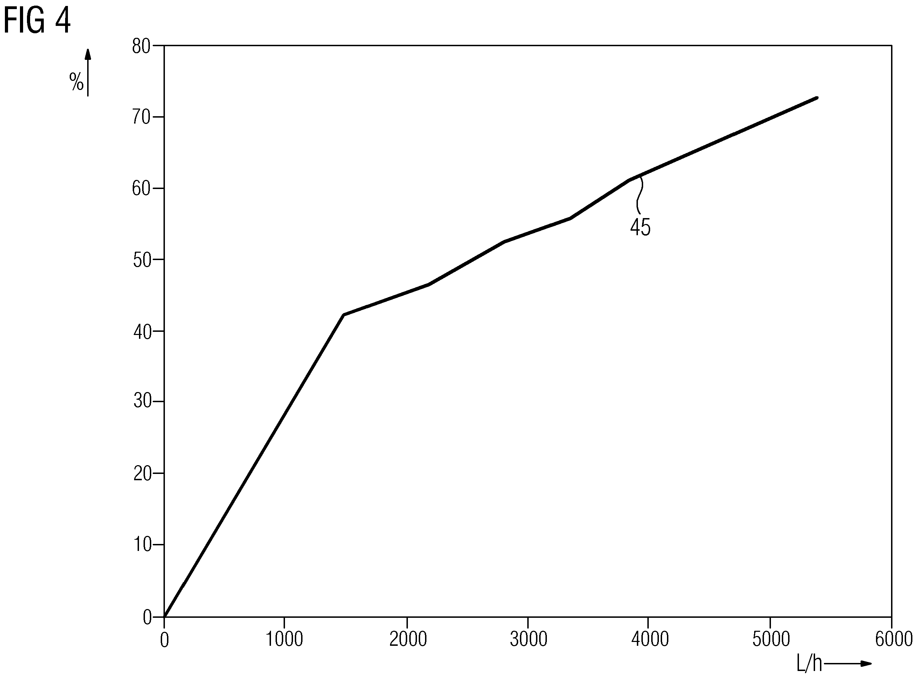

Anhand der Zeichnungen, in welchen ein Ausführungsbeispiel der Erfindung (Figuren 3 und 4) dargestellt ist, werden Nachteile herkömmlicher Regeleinrichtungen, die Erfindung sowie Ausgestaltungen und Vorteile näher erläutert.

Es zeigen:
- Figuren 1 und 2: eine Wurzelortskurve bzw. eine Sprungantwort zur Verdeutlichung der Nachteile herkömmlicher Regeleinrichtungen,
- Figur 3: ein Blockschaltbild einer neuen Anordnung mit einer Pufferstandsregelung,
- Figur 4: eine experimentell ermittelte Kennlinie für eine Bestimmung einer Korrekturgröße zur Verwendung in einer Störgrößenaufschaltung,
- Figuren 5A-C: zum Vergleich Zeitverläufe von Prozessvariablen bei einer herkömmlichen Regelung mit PI-Regler, und
- Figuren 6A-C: Zeitverläufe von Prozessvariablen bei einer Pufferstandsregelung mit der neuen Regeleinrichtung.

Die Figuren 1 und 2 wurden bereits bei der Beschreibung des Standes der Technik und dessen Nachteile erläutert.

Ein Ausführungsbeispiel der Erfindung zeigen die Figuren 3 und 4. Ein Behälter 30 dient gemäß Figur 3 in einer nicht weiter dargestellten Anlage als Puffer, um in einem Ablauf 31 trotz schwankendem Durchfluss in einem Zulauf 32 eine möglichst gleichmäßige Ablaufmenge zu realisieren. Die Füllmenge des Behälters 30 soll dazu beispielsweise zwischen 40% und 60% Befüllung gehalten werden. Zur Regelung des Füllstands als Regelgröße x werden dessen aktuelle Werte mittels eines Messumformers 33 erfasst, mit einem vorgegebenen Sollwert w des Füllstands , beispielsweise 50% Befüllung, verglichen und eine beim Vergleich gebildete Regeldifferenz über ein Totzonenglied 34 auf einen Regler 35, der z. B. als linearer P-Regler ausgeführt ist, geführt. Das Totzonenglied 34 ist entsprechend dem aus der eingangs genannten EP 2 579 112 B1 bekannten Totzonenglied ausgebildet und durch Parametrierung auf die zulässige Schwankungsbreite des Füllstands eingestellt. Das Totzonenglied 34 ist wie in der EP 2 579 112 B1 beschrieben mit einer Steuereinrichtung zu seiner automatischen Aktivierung und Deaktivierung versehen, die in Figur 3 der Übersichtlichkeit nicht gesondert dargestellt ist. Das Totzonenglied (34) ist also mit Mitteln versehen, durch welche es automatisch deaktivierbar ist, wenn die Regeldifferenz einen vorgegebenen oder vorgebbaren ersten Schwellwert überschreitet, wobei im deaktivierten Zustand die über das Totzonenglied (34) geführte Regeldifferenz von einer eingestellten Totzone unbeeinflusst ist, und durch welche das Totzonenglied (34) automatisch wieder aktivierbar ist, wenn die Regeldifferenz einen vorgegebenen oder vorgebbaren zweiten Schwellwert, der kleiner als der erste Schwellwert ist, unterschreitet. Weiterhin wird mittels eines Durchflussmessumformers 36 ein aktueller Zulaufwert, der dem Volumenstrom im Zulauf 32 zum Pufferspeicher 30 entspricht, bestimmt. Mittels eines Tiefpassfilters 37 zur Signalglättung und mittels eines Kennlinienglieds 38 zur Berücksichtigung von Nichtlinearitäten wird in Abhängigkeit des Zulaufwerts ein Wert einer Korrekturgröße d ermittelt und dieser zur Korrektur der durch den Regler 35 bestimmten Werte einer Stellgröße u einem Summierglied 39 nach Art einer Störgrößenaufschaltung zugeführt. In der Praxis ist eine Störgrößenaufschaltung häufig bereits in einen Reglerbaustein integriert, der durch ein Prozessleitsystem bereitgestellt wird. Falls in einer abweichenden Ausführung der Reglerbaustein über keine interne Störgrößenaufschaltung verfügt, kann die Korrektur der durch den Regler 35 bestimmten Stellgröße u selbstverständlich ebenso, wie in Figur 3 gezeigt, in einem nachgeschalteten Summierglied 39 durchgeführt werden. Eine auf diese Weise korrigierte Stellgröße u1 ist zur Einstellung des Volumenstroms im Ablauf 31 auf ein Regelventil 40 mit beispielsweise pneumatischem Antrieb geführt.

Mit der in Figur 3 dargestellten Regeleinrichtung kann folgendes vorteilhaftes Verhalten einer Pufferstandsregelung erreicht werden:
1) Für jeden Zulaufwert sorgt allein schon die Korrektur des durch den Regler 35 bestimmten Stellwerts u nach Art einer Störgrößenaufschaltung für einen in etwa sinnvollen Wert der korrigierten Stellgröße u1 und somit für eine in etwa sinnvolle Stellung des Ventils 40.
2) Die getroffene Einstellung des Ventils 40 wird jedoch nie ganz exakt dem jeweiligen Zulauf entsprechen, so dass der Füllstand im Behälter 30 langsam steigt oder sinkt. Aufgrund des Totzonenglieds 34 wirken sich kleinere Schwankungen des Füllstands und Messrauschen meist nicht auf den Stellwert u des Reglers 35 aus.
3) Weil das Tiefpassfilter 37 zur Glättung von Zulaufwerten nur im Pfad der Störgrößenaufschaltung und nicht im Rückführzweig des geschlossenen Regelkreises liegt, hat dieses keine destabilisierende Wirkung. Das Filter 37 kann daher so langsam eingestellt werden, wie es die Anforderungen der Pufferstandsregelung im Hinblick auf einen möglichst gleichmäßigen Ablauf aus dem Behälter 30 und eine Schonung des Ventils 40 sinnvoll erscheinen lassen.
4) Mit der Breite der Totzone des Totzonenglieds 34 und der Zeitkonstante des Tiefpassfilters 37 lässt sich die Wirkungsweise der Regeleinrichtung sehr flexibel an unterschiedliche Anforderungen anpassen, ohne die Stabilität zu gefährden.
5) Wenn der Füllstand im Behälter 30 nach einiger Zeit eine der Totzonengrenzen erreicht, wird die Totzone vorübergehend deaktiviert. Der Rückführzweig des Regelkreises kommt damit zur Wirkung und führt den Füllstand zurück z. B. in die Mitte der Totzone. Dort wird die Totzone erneut aktiviert und das Ventil 40 kommt dadurch zur Ruhe, bis zum nächsten Mal eine Grenze der Totzone erreicht wird.
6) Weil der Regler 35 nur einen verhältnismäßig kleinen oder überhaupt keinen I-Anteil hat, treten die typischen Schwingungen bisheriger Pufferstandsregelungen nicht mehr auf, die - wie oben näher erläutert - durch das komplexe Polpaar 3, 4 (Figur 1) begründet waren. Im Gegensatz zu bisherigen Pufferstandsregelungen ist es in vorteilhafter Weise zudem nicht mehr erforderlich, den Regler beim Anfahren der Anlage in einem Handbetrieb auf einen sinnvollen Startwert zu setzen.
7) Die Verringerung bzw. das Weglassen des I-Anteils im Regler 35 wird vorteilhaft durch die erfindungsgemäße Stellgrößenkorrektur ermöglicht, da durch diese allzu schnelle Veränderungen der Regelabweichungen, die in der Praxis nicht akzeptiert würden, vermieden werden.
8) Die Anwendung einer Stellgrößenkorrektur nach Art einer Störgrößenaufschaltung kann in vorteilhafter Weise von einer praktikablen Vorgehensweise für Entwurf und Parametrierung beispielsweise des Kennlinienglieds 38 sowie des Totzonenglieds 34 begleitet werden.
9) Die Gleichmäßigkeit des Ablaufs aus dem Behälter 30 wird insbesondere durch das dem Regler 35 vorgeschaltete Totzonenglied 34 verbessert, weil ohne dieses der Regler 35 kleine Füllstandsänderungen in Stellungsänderungen des Ventils 40 umsetzen würde. Wenn andererseits die Stellgrößenkorrektur nach Art einer Störgrößenaufschaltung oder die dynamische Aktivierung der Totzone des Totzonenglieds 34 fehlen würde, liefe die von sich aus nicht stabile Pufferstandsregelung gegen den Rand der Totzone bzw. die durch den Regler 35 bestimmte Stellgröße u würde sich dort einpendeln, was zu laufenden Stelleingriffen am Rand der Totzone führen und dem Ziel eines möglichst gleichmäßigen Ablaufs zuwider laufen würde.

Eine erfindungsgemäße Regeleinrichtung ist beispielsweise mit dem Prozessleitsystem SIMATIC PCS7 aufwandsarm durch eine Kombination von Standardfunktionsbausteinen aus der dort vorhandenen "Advanced Process Library" realisierbar. PID-Reglerbausteine ab Version 8.0 besitzen Einstellmöglichkeiten für eine dynamisch aktivierbare Totzone sowie einen Eingang, dort als "Feed Forward" bezeichnet, für eine Störgrößenaufschaltung. Ein Kennlinienglied kann in einfacher Weise durch einen Funktionsbaustein "Polygon" realisiert werden, in welchen zur Festlegung der Kennlinie Stützpunkte eingegeben werden. Erfahrungsgemäß genügen dafür bereits 5 bis 10 Stützpunkte.

Figur 4 zeigt ein Beispiel einer Kennlinie 45, die zur Parametrierung eines Kennlinienglieds 38 (Figur 3) experimentell ermittelt wurde. Auf der Abszisse sind die jeweils gemessenen Werte des Zulaufs zum Behälter in Liter pro Stunde, Beschriftung L/h, auf der Ordinate die dabei einzustellende Öffnung des Ablaufventils in Prozent, Beschriftung %, aufgetragen. Dabei wird deutlich, dass schon eine geringe Anzahl von Stützpunkten zur Parametrierung der Kennlinie 45 ausreicht.

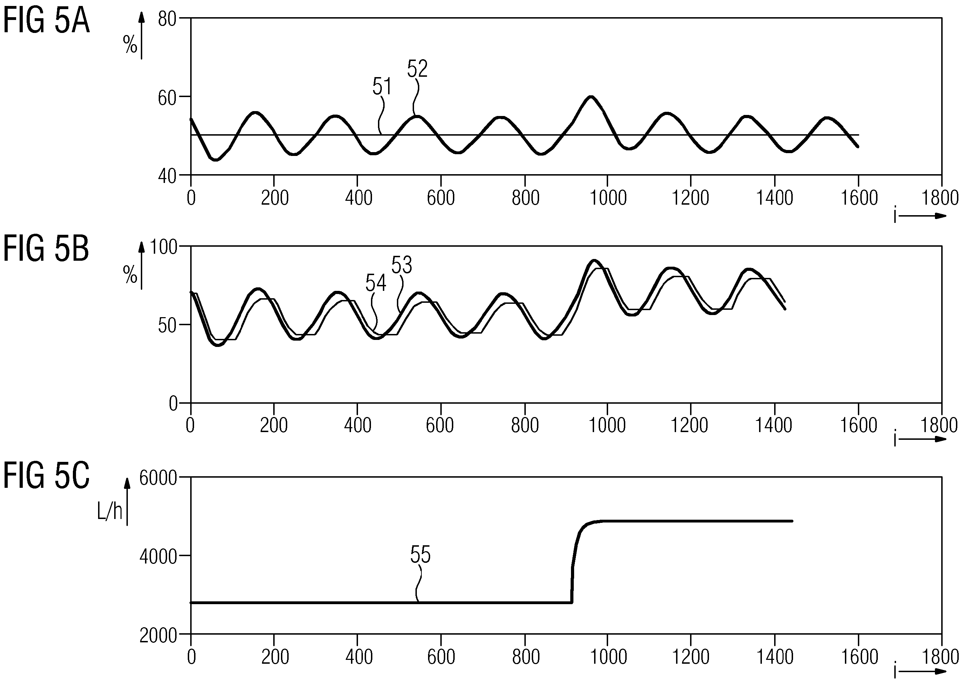

Zur deutlicheren Hervorhebung der mit der neuen Regeleinrichtung zur Pufferstandsregelung erzielten Vorteile sind in den Figuren 5A, 5B und 5C zunächst verschiedene Verläufe von Prozessvariablen dargestellt, die in der Praxis mit einem herkömmlichen PI-Regler mit den Einstelllungen Gain = -3 und Ti = 63 Sekunden erhalten wurden. Dabei wurde ein Regelkreis verwendet, wie er in den eingangs gegebenen Erläuterungen zum Stand der Technik beschrieben wurde. Auf der Abszisse ist die Nummer des jeweiligen Abtastschritts i, wobei die Dauer der Abtastintervalle 500 Millisekunden beträgt, auf der Ordinate der Figur 5A der Füllstand in Prozent, auf der Ordinate der Figur 5B die Ventilstellung in Prozent und auf der Ordinate der Figur 5C der Zulauf in Liter pro Stunde angegeben. Der Sollwert des Füllstands ist entsprechend einem Verlauf 51 konstant auf 50% gesetzt. Ein Verlauf 52 in Figur 5A zeigt die Folge der am Behälter gemessenen Füllstandswerte an. Ein Verlauf 53 in Figur 5B stellt die jeweiligen Werte der Stellgröße dar, die an das Ablaufventil gegeben werden, ein Verlauf 54 die jeweiligen Werte einer Stellungsrückmeldung, die durch einen Positionsgeber am Ventil erfasst werden. Ein Verlauf 55 in Figur 5C zeigt die jeweils zu den Abtastzeitpunkten an einer Pumpe im Zulauf des Behälters erfasste Drehzahl. Am Verlauf 53 ist die bereits eingangs beschriebene, unerwünschte Dauerschwingung der Stellgröße deutlich erkennbar. Etwa beim 900sten Abtastschritt (i = 900) wird die Drehzahl der Pumpe im Zulauf von 700 auf 1100 Umdrehungen pro Minute erhöht, was zu einem entsprechenden Anstieg der erfassten Zulaufwerte gemäß dem Verlauf 55 führt und eine deutliche Störung im Verlauf 52 des Füllstands verursacht. Anschließend stellt sich im Regelkreis entsprechend dem Verlauf 53 ein höherer Mittelwert der Stellgröße ein.

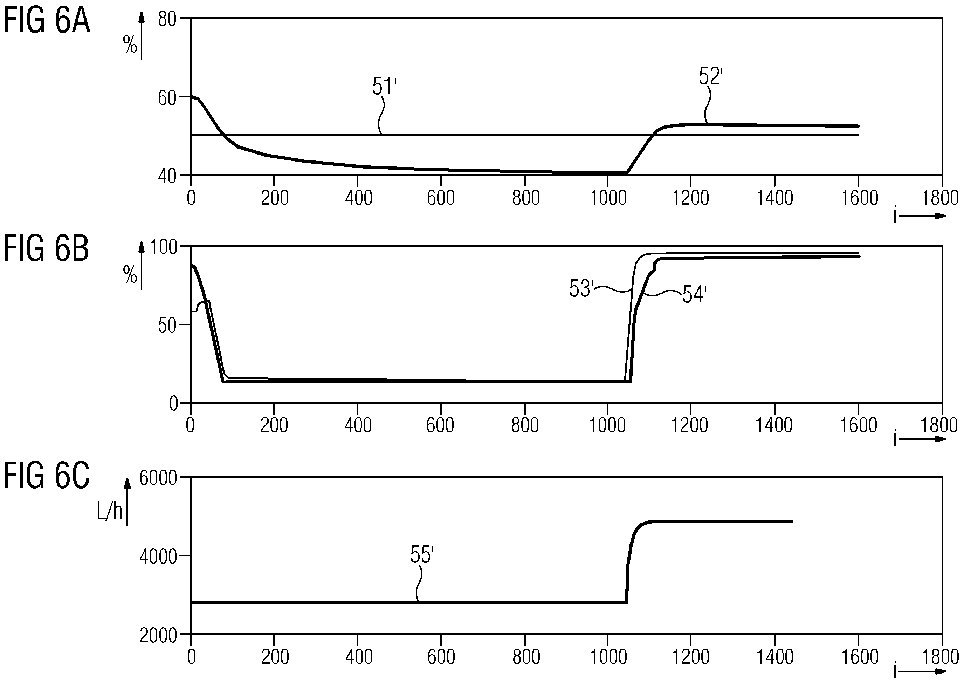

In den Figuren 6A, 6B und 6C sind dazu korrespondierende Verläufe 51' ... 55' eingezeichnet, die durch eine praktische Realisierung einer erfindungsgemäßen Regeleinrichtung für Sollwerte des Füllstands, am Behälter gemessenen Füllstandswerte, Werte der Stellgröße, Stellungsrückmeldung bzw. Drehzahlen erhalten wurden. Dabei wurde dieselbe Achsenskalierung verwendet. Ein in der erfindungsgemäßen Regeleinrichtung eingesetzter PI-Regler wurde mit der Verstärkung 1,5 parametriert. Ein dem Regler vorgeschaltetes Totzonenglied sorgt dafür, dass Füllstände zwischen 40% und 60% vom Regler ohne Eingriff toleriert werden. Am Verlauf 53' in Figur 6B ist deutlich erkennbar, dass lange Zeitabschnitte erhalten werden, in welchen die Stellgröße unverändert bleibt und daher keine neuen Stellbefehle ausgegeben werden. Dies sorgt für einen gleichmäßigen Ablauf aus dem Behälter und eine Schonung des Stellglieds, im Beispiel gemäß Figur 3 des Ventils 40 mit pneumatischem Antrieb. Auch die Wirkung der Stellgrößenkorrektur nach Art einer Störgrößenaufschaltung ist deutlich erkennbar: bei einer Änderung des Zulaufs gemäß Verlauf 55' geht die Stellung des Ventils entsprechend dem sprungförmigen Verlauf 53' in Figur 6B zügig in etwa auf einen sinnvollen Wert über, der wiederum für einen längeren Zeitraum konstant gehalten werden kann. Eine Zeitkonstante eines Tiefpassfilters, der zur Glättung der Zulaufwerte verwendet wird, könnte je nach Anforderung an die Pufferwirkung deutlich langsamer eingestellt werden. Die Zeitkonstante wurde in diesem praktischen Versuch auf zehn Sekunden gesetzt. Wie bereits oben erläutert, werden durch die Stellgrößenkorrektur sinnvolle aber nicht unbedingt exakte Werte der Ventilstellung bei Änderungen der Zulaufwerte vorgegeben. Zudem ist die Regelstrecke nicht asymptotisch stabil. Bei festgehaltener Ventilstellung wird daher der gemessene Füllstand des Behälters immer langsam nach oben oder unten wegkriechen. Falls bei diesem Kriechvorgang die Begrenzung der Totzone erreicht werden sollte, was in dem Zeitausschnitt der Figuren 6A bis 6C nicht der Fall ist, würde der eingesetzte Regler aufgrund der Dynamik des Totzonenglieds aktiv werden und den Füllstand wieder in die Mitte der Totzone zurückführen.

## Patentansprüche

1. Regeleinrichtung, in welcher ein Totzonenglied (34) einem Regler (35) vorgeschaltet ist, wobei das Totzonenglied (34) mit Mitteln versehen ist, durch welche es automatisch deaktivierbar ist, wenn eine Regelabweichung einen vorgegebenen oder vorgebbaren ersten Schwellwert überschreitet, wobei im deaktivierten Zustand eine über das Totzonenglied (34) geführte Regelabweichung von einer eingestellten Totzone unbeeinflusst ist, und durch welche das Totzonenglied (34) automatisch wieder aktivierbar ist, wenn die Regelabweichung einen vorgegebenen oder vorgebbaren zweiten Schwellwert, der kleiner als der erste Schwellwert ist, unterschreitet, **dadurch gekennzeichnet, dass** die Regeleinrichtung zur Regelung eines Füllstands in einem Pufferspeicher weiterhin aufweist,
- Mittel (33) zur Bestimmung eines Füllstandswerts, der einem Istwert des Füllstands als Regelgröße (x) in der Regeleinrichtung entspricht,
- Mittel (36) zur Bestimmung eines Zulaufwerts, der einem Volumenstrom in einem Zulauf (32) zum Pufferspeicher (30) entspricht,
- Mittel (37, 38) zur Bestimmung eines Korrekturwerts in Abhängigkeit des Zulaufwerts,
- Mittel (39) zur Korrektur eines durch den Regler (35) bestimmten Werts einer Stellgröße (u) in Abhängigkeit des Korrekturwerts und
- Mittel (40) zur Einstellung des Volumenstroms in einem Ablauf (31) des Pufferspeichers (30) in Abhängigkeit des korrigierten Werts.

2. Regeleinrichtung nach Anspruch 1, **dadurch gekennzeichnet, dass** der Regler (35) ein linearer P-Regler oder ein linearer PI-Regler mit verhältnismäßig kleinem I-Anteil ist.

3. Regeleinrichtung nach Anspruch 1 oder 2, **dadurch gekennzeichnet, dass** zur Bestimmung des Werts einer Korrekturgröße (d) in Abhängigkeit des Zulaufwerts ein Kennlinienglied (38) vorhanden ist, dessen Kennlinie empirisch vorbestimmt ist.

4. Regeleinrichtung nach einem der vorhergehenden Ansprüche, **dadurch gekennzeichnet, dass** zur Einstellung des Volumenstroms im Ablauf (31) ein Regelventil (40) mit pneumatischem Antrieb vorhanden ist.

5. Regeleinrichtung nach einem der vorhergehenden Ansprüche, **dadurch gekennzeichnet, dass** ein Tiefpassfilter (37) zur Glättung von Zulaufwerten vorhanden ist.

6. Regelungsverfahren mit einem Regler (35), welchem ein Totzonenglied (34) vorgeschaltet ist, wobei das Totzonenglied (34) automatisch deaktiviert wird, wenn eine Regelabweichung einen vorgegebenen oder vorgebbaren ersten Schwellwert überschreitet, wobei im deaktivem Zustand eine über das Totzonenglied geführte Regelabweichung von einer eingestellten Totzone nicht beeinflusst wird, und wobei das Totzonenglied automatisch wieder aktiviert wird, wenn die Regelabweichung einen vorgegebenen oder vorgebbaren zweiten Schwellwert, der kleiner als der erste Schwellwert ist, unterschreitet, **dadurch gekennzeichnet, dass** zur Regelung eines Füllstands in einem Pufferspeicher (30)
- ein Füllstandswert bestimmt wird, der einem Istwert des Füllstands als Regelgröße (x) in der Regeleinrichtung entspricht,
- ein Zulaufwert bestimmt wird, der einem Volumenstrom in einem Zulauf (32) zum Pufferspeicher (30) entspricht,
- ein Korrekturwert in Abhängigkeit des Zulaufwerts bestimmt wird,
- ein durch den Regler (35) bestimmter Wert einer Stellgröße (u) in Abhängigkeit des Korrekturwerts korrigiert wird und
- der Volumenstrom in einem Ablauf (31) des Pufferspeichers (30) in Abhängigkeit des korrigierten Werts eingestellt wird.

7. Computerprogramm mit durch einen Computer ausführbaren Programmcodeanweisungen zur Implementierung des Verfahrens nach Anspruch 6, wenn das Computerprogramm auf einem Computer ausgeführt wird.

8. Computerprogrammprodukt, insbesondere Datenträger oder Speichermedium, mit einem durch einen Computer ausführbaren Computerprogramm gemäß Anspruch 7.

## Claims

1. Control device in which a dead zone element (34) is connected upstream of a controller (35), wherein the dead zone element (34) is provided with means by which it can be automatically deactivated if a control deviation exceeds a predefined or predefinable first threshold value, wherein in the deactivated state a control deviation managed via the dead zone element (34) is uninfluenced by a set dead zone, and by which the dead zone element (34) can be automatically reactivated if the control deviation falls below a predefined or predefinable second threshold value which is smaller than the first threshold value, **characterised in that** the control device further comprises the following for controlling a level in a buffer tank,
- means (33) for determining a level value which corresponds to an actual value of the level as a control variable (x) in the control device,
- means (36) for determining an inflow value which corresponds to a volume flow in an inflow (32) to the buffer tank (30),
- means (37, 38) for determining a correction value as a function of the feed value,
- means (39) for correcting a value, determined by the controller (35), of a manipulated variable (u) as a function of the correction value and
- means (40) for adjusting the volume flow in an outflow (31) of the buffer tank (30) as a function of the corrected value.

2. Control device according to claim 1, **characterised in that** the controller (35) is a linear P controller or a linear PI controller with a relatively small I proportion.

3. Control device according to claim 1 or 2, **characterised in that** to determine the value of a correction variable (d) as a function of the inflow value a characteristic curve element (38) is present, the characteristic curve of which is empirically predetermined.

4. Control device according to one of the preceding claims, **characterised in that** to adjust the volume flow in the outflow (31) a control valve (40) with a pneumatic drive is present.

5. Control device according to one of the preceding claims, **characterised in that** a low-pass filter (37) is present for smoothing inflow values.

6. Control method having a controller (35) with a dead zone element (34) connected upstream, wherein the dead zone element (34) is automatically deactivated if a control deviation exceeds a predefined or predefinable first threshold value, wherein in the deactivated state a control deviation managed via the dead zone element is uninfluenced by a set dead zone, and wherein the dead zone element is automatically reactivated if the control deviation falls below a predefined or predefinable second threshold value which is smaller than the first threshold value, **characterised in that** to control a level in a buffer tank (30)
- a level value is determined which corresponds to an actual value of the level as a control variable (x) in the control device,
- an inflow value is determined which corresponds to a volume flow in an inflow (32) to the buffer tank (30),
- a correction value is determined as a function of the inflow value,
- a value, determined by the controller (35), of a manipulated variable (u) is corrected as a function of the correction value and
- the volume flow in an outflow (31) of the buffer tank (30) is adjusted as a function of the corrected value.

7. Computer program containing program code instructions that can be executed by a computer in order to implement the method according to claim 6 when the computer program is executed on a computer.

8. Computer program product, in particular a data storage medium or a memory medium, containing a computer program according to claim 7 that can be executed by a computer.

## Revendications

1. Dispositif de réglage, dans lequel un organe (34) à zone morte est monté en avant d'un régleur (35), l'organe (34) à zone morte étant pourvu de moyens par lesquels il peut être désactivé automatiquement, si un écart de réglage dépasse une première valeur de seuil donnée à l'avance ou pouvant l'être, dans lequel, à l'état désactivé, un écart de réglage induit par l'organe (34) à zone morte est non influencé par une zone morte réglée, et par lequel l'organe (34) à zone morte peut être réactivé automatiquement, si l'écart de réglage devient inférieur à une deuxième valeur de seuil donnée à l'avance ou pouvant l'être, qui est plus petite que la première valeur de seuil, **caractérisé en ce que** le dispositif de réglage a, en outre, pour régler un niveau dans un réservoir tampon,
- un moyen (33) de détermination d'une valeur de niveau, qui correspond à une valeur réelle du niveau, comme grandeur (x) réglée dans le dispositif de réglage,
- un moyen (36) de détermination d'une valeur d'afflux, qui correspond à un courant en volume dans un afflux (32) au réservoir (30) tampon,
- un moyen (37, 38) de détermination d'une valeur de correction en fonction de la valeur d'afflux,
- un moyen (39) de correction d'une valeur déterminée par le régleur (35) d'une grandeur (u) réglante en fonction de la valeur de correction et
- un moyen (40) de réglage du courant en volume dans une évacuation (31) du réservoir (30) tampon en fonction de la valeur corrigée.

2. Dispositif de réglage suivant la revendication 1, **caractérisé en ce que** le régleur (35) est un régleur P linéaire ou un régleur PI linéaire à proportion I relativement petite.

3. Dispositif de réglage suivant la revendication 1 ou 2, **caractérisé en ce que**, pour déterminer la valeur d'une grandeur (d) de correction en fonction de la valeur d'afflux, il y a un organe (38) de courbe caractéristique, dont la courbe caractéristique est déterminée à l'avance empiriquement.

4. Dispositif de réglage suivant l'une des revendications précédentes, **caractérisé en ce que**, pour régler le courant en volume dans l'évacuation (31), il y a une soupape (40) de réglage à entraînement pneumatique.

5. Dispositif de réglage suivant l'une des revendications précédentes, **caractérisé en ce qu'**il y a un filtre (37) passe bas pour lisser des valeurs d'afflux.

6. Procédé de réglage par un régleur (35), en amont duquel est monté un organe (34) à zone morte, dans lequel on désactive automatiquement l'organe (34) à zone morte, si un écart de réglage dépasse une première valeur de seuil donnée à l'avance ou pouvant l'être, dans lequel, dans l'état désactivé, un écart de réglage, induit par l'organe à zone morte, n'est pas influencé par une zone morte réglée, et dans lequel on réactive automatiquement l'organe à zone morte, si l'écart de réglage devient inférieur à une deuxième valeur de seuil donnée à l'avance ou pouvant l'être, qui est plus petite que la première valeur de seuil, **caractérisé en ce que**, pour régler un niveau dans un réservoir (30) tampon,
- on détermine une valeur de niveau, qui correspond à une valeur réelle du niveau, comme grandeur (x) réglée, dans le dispositif de réglage,
- on détermine une valeur d'afflux, qui correspond à un courant en volume dans un afflux (32) au réservoir (30) tampon,
- on détermine une valeur de correction en fonction de la valeur d'afflux,
- on corrige une valeur déterminée par le réglage (35) d'une grandeur (u) réglante en fonction de la valeur de correction et
- on règle le courant en volume dans une évacuation (31) du réservoir (30) tampon en fonction de la valeur corrigée.

7. Programme d'ordinateur ayant des instructions de code de programme pouvant être réalisées par un ordinateur pour la mise en oeuvre du procédé suivant la revendication 6, lorsque le programme d'ordinateur est réalisé sur un ordinateur.

8. Produit de programme d'ordinateur, notamment support de données ou support de mémoire, ayant un programme d'ordinateur suivant la revendication 7, pouvant être réalisé sur un ordinateur.
